Europäisches Patentamt

European Patent Office

Office européen des brevets

(19)

(11) Numéro de publication : **0 109 892**
**B1**

(12)

# FASCICULE DE BREVET EUROPÉEN

(45) Date de publication du fascicule du brevet :
**30.12.86**

(21) Numéro de dépôt : **83402181.8**

(22) Date de dépôt : **10.11.83**

(51) Int. Cl.⁴ : **F 27 B 9/06,** H 05 B 3/00,
B 23 K 1/00, F 27 D 11/02

(54) **Four continu de brasure de composants électroniques.**

(30) Priorité : **17.11.82 FR 8219220**

(43) Date de publication de la demande :
**30.05.84 Bulletin 84/22**

(45) Mention de la délivrance du brevet :
**30.12.86 Bulletin 86/52**

(84) Etats contractants désignés :
**AT BE CH DE FR GB IT LI LU NL SE**

(56) Documents cités :
**DE-A- 1 508 533**
**FR-A- 2 149 260**
**FR-A- 2 295 386**
**FR-A- 2 412 802**

(73) Titulaire : **PIEZO-CERAM ELECTRONIQUE**
**Le Péage Route de Grasse**
**F-06600 - Antibes (FR)**

(72) Inventeur : **Boumendil, Jean-Jack**
**"Les Hortensias no 15 Les Hameaux du Soleil"**
**F-06270 Villeneuve Loubet (FR)**
Inventeur : **Pescatore, Richard**
**13 avenue de la Velmasque**
**F-06600 Antibes (FR)**

(74) Mandataire : **de Boisse, Louis et al**
**CABINET DE BOISSE 37, Avenue Franklin D. Roosevelt**
**F-75008 Paris (FR)**

## Description

L'invention concerne un four continu de brasure de composants électroniques.

Le présent four continu permet la réalisation de cycles de brasure de composants électroniques au défilé ;

sous atmosphère contrôlée,

avec un contrôle d'homogénéité de chauffe au-dessus de l'eutectique de brasure utilisée, avec contrôle de la pente de montée en température du pic de fusion,

avec contrôle de la pente de refroidissement du pic de fusion.

Il permet de maîtriser tous les paramètres intervenant dans le processus de report de composants sur un substrat opaque aux infra-rouges et propres aux brasures utilisées.

Plus particulièrement, l'invention concerne un four continu de brasure pour l'assemblage de composants électroniques sur un support opaque aux rayons infra-rouges au moyen d'un produit de brasure ayant une température de fusion eutectique, qui comprend un moufle métallique (1), un tapis métallique sans fin (2) pénétrant dans le moufle à une extrémité de celui-ci et en sortant à l'autre extrémité, des moyens d'entraînement dudit tapis métallique, des moyens de chauffage s'étendant sur une portion (C) de la longueur du moufle, des moyens d'isolation thermiques (8, 10, 11, 12, 13) prévus autour de la portion chauffée du moufle, des moyens de refroidissement forcé (14, 15, 16) s'étendant sur une autre portion (R) de la longueur du moufle située à la suite de la précédente, des moyens d'introduction (17, 18, 19) d'un ou plusieurs gaz à l'intérieur du moufle, des moyens d'isolement (3, 4, 5) prévus à chaque extrémité du moufle pour isoler l'espace intérieur de celui-ci vis-à-vis de l'extérieur, caractérisé en ce que les moyens de chauffage comprennent, dans le sens de l'entrée vers la sortie du four, des premiers moyens de chauffage extérieurs (6) au moufle assurant la montée en température de l'assemblage à braser jusqu'à un palier de température inférieur à la température eutectique du produit de brasure, et des seconds moyens de chauffage intérieurs (7) au moufle portant le produit de brasure à une température supérieure à ladite température eutectique, ces moyens de chauffage intérieurs étant constitués de moyens de chauffage électrique par rayonnement infra-rouge (7a) disposés sous le tapis métallique et d'un réflecteur (9) prévu à la partie supérieure du moufle et faisant face au tapis métallique.

Des supports opaques aux rayons infra-rouges sont par exemple les substrats céramiques, comme les supports d'alumine.

La description qui va suivre en regard des dessins annexés donnés à titre d'exemples non limitatifs fera bien comprendre comment l'invention peut être réalisée, les particularités qui ressortent tant des dessins que du texte faisant bien entendu partie de ladite invention.

La figure 1 est une vue schématique illustrant un mode de réalisation du four de l'invention.

La figure 2 est un graphique montrant le profil de température dans un four selon l'invention du genre de celui illustré sur la figure 1, pour deux types d'alliages de brasage différents, en fonction du temps de séjour dans le four d'un article à braser placé sur la bande transporteuse.

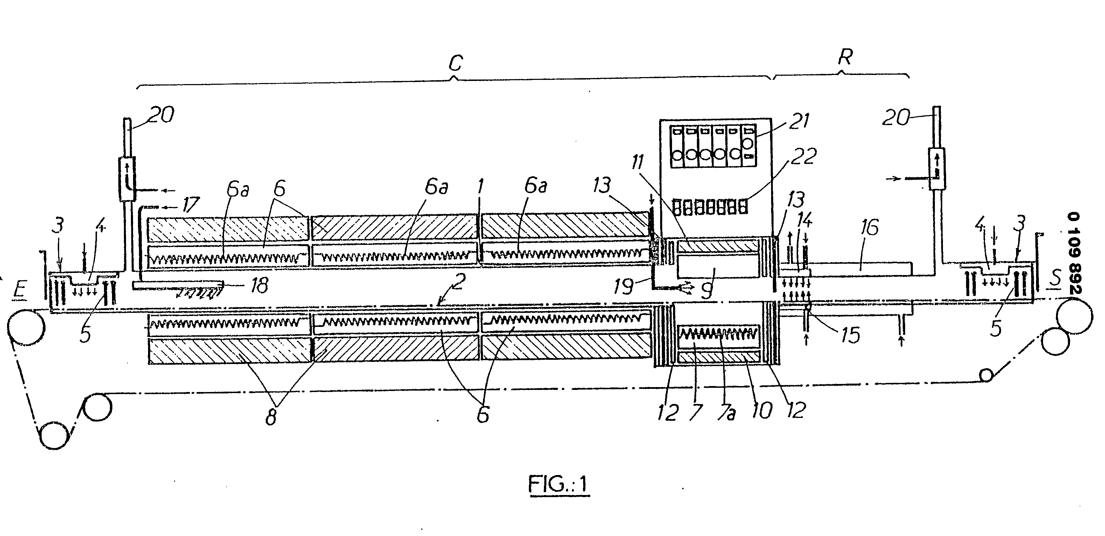

Sur la figure 1 est représenté un four selon l'invention. Ce four comprend un moufle métallique 1 de forme allongée (par exemple d'une longueur d'environ 2 mètres) ayant une section transversale rectangulaire. Ce moufle est parcouru de gauche à droite, par une bande transporteuse métallique sans fin 2 sur laquelle sont placés, du côté de l'entrée E, les articles à traiter. Les articles brasés sont recueillis à la sortie S du four. La vitesse de déplacement de la bande 2 est d'environ 50 cm/mn, par exemple. A l'entrée E et à la sortie S du moufle sont prévues des barrières gazeuses 3 isolant le four de l'extérieur. Chacune de ces barrières est formée d'un distributeur 4 envoyant un courant de gaz inerte, tel que de l'azote, dirigé de haut en bas. De part et d'autre du distributeur sont prévus des volets articulés 5 qui canalisent le courant de gaz tout en permettant le passage des articles lorsqu'ils s'en présentent sur la bande transporteuse.

Le moufle comprend une portion de chauffage C et une portion de refroidissement R faisant suite à la précédente. Les moyens de chauffage de la portion C comprennent, de gauche à droite, six éléments de chauffage extérieurs 6 prévus au-dessus et au-dessous du moufle et répartis en trois groupes successifs, et un élément de chauffage intérieur 7. Des isolations thermiques soignées 8 sont prévues autour de la portion de chauffage C. Les éléments extérieurs 6 sont constitués, de façon classique, de résistances électriques 6a logées dans des gaines de matière céramique. Chacun de ces éléments peut avoir, par exemple, une longueur d'environ 30 cm. L'élément de chauffage intérieur 7 est logé dans le moufle lui-même qui est surdimensionné à cet effet. Cet élément 7 comprend une résistance électrique 7a gainée de céramique qui est disposée à la partie inférieure du moufle, au-dessous de la bande transporteuse. A la partie supérieure du moufle et faisant face au tapis métallique est prévu un réflecteur 9. Des isolations thermiques 10, 11, 12 et 13 sont prévues entre l'élément 7 et le moufle, d'une part, et le réflecteur et le moufle, d'autre part.

La portion de refroidissement R suit immédiatement la portion de chauffage C. La portion R comprend des moyens de refroidissement rapide par jets gazeux ($N_2$ ou mélange $N_2 + H_2$, par exemple) dirigés directement sur l'article, constitués de deux distributeurs de gaz 14 et 15 placés, respectivement, à la partie supérieure et à la partie inférieure du moufle, ainsi qu'un dispositif de refroidissement d'ensemble constitué par une chemise à circulation d'eau 16.

Le four comprend, en outre, un premier conduit d'alimentation 17 en gaz inerte, tel que l'azote, alimentant une rampe distributrice 18 s'étendant sur une partie notable de la longueur du premier groupe de chauffage extérieur. Du fait de la longueur de la rampe et du fait que les orifices d'éjection du gaz sont prévus à l'extrémité seulement de la rampe, le gaz est préchauffé avant d'être injecté dans le moufle.

Est prévu également un deuxième conduit d'alimentation 19 d'un mélange de gaz inerte (tel que $N_2$) et d'hydrogène contenant, par exemple, 5 % en volume d'hydrogène, qui débouche, dans le moufle, au niveau de l'élément de chauffage interne 7. Le four de l'invention est muni aussi de deux cheminées à venturi 20 permettant d'évacuer les gaz du moufle sans perturbation intempestive.

Enfin, un bloc de régulation 21 des moyens de chauffage et un bloc de commande 22 des fluides sont prévus, de façon classique.

Le four de l'invention permet d'assurer :

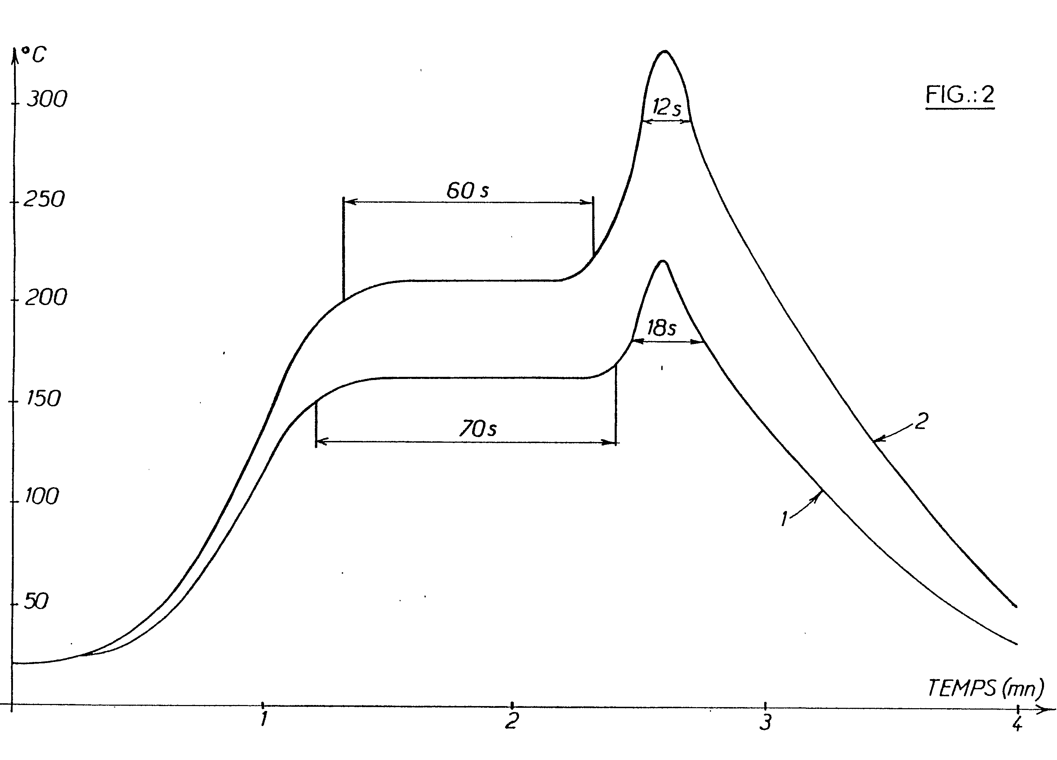

a) une montée rapide en température homogène de l'assemblage de composants à souder et de leur support. Ceci est effectué par les moyens de chauffage extérieurs 6 qui chauffent l'article à traiter par-dessus et par-dessous, la chaleur se transmettant à l'article par conduction (par le dessous) et par convection et rayonnement (par le dessus). Cette montée en température est conduite sous atmosphère inerte protectrice, par exemple par l'introduction d'azote par le moyen du conduit 17. La montée en température se termine par un palier, comme le montre la figure 2, qui se situe un peu au-dessous de la température eutectique du produit de brasure utilisé. Ce palier permet l'élimination des solvants contenus dans le produit de brasure. Par exemple, dans le cas d'un alliage Sn/Pb (60/40) sous forme de pâte, le palier peut se situer vers 160 °C. Dans le cas d'un alliage Sn/Pb (95/5) sous forme de pâte, le palier sera plus élevé, par exemple vers 210 °C. La pente de la courbe de montée en température peut être ajustée en jouant sur la puissance de chauffe de chacun des trois groupes d'éléments de chauffage extérieurs 6, par l'intermédiaire du régulateur 21.

b) un échauffement rapide sous atmosphère réductrice ($N_2/H_2$) du produit de brasure jusqu'au « pic de fusion » (température supérieure à la température eutectique du produit de brasure) par les moyens de chauffage intérieurs 7 avec possibilité de contrôler la durée de ce pic en jouant sur la vitesse d'entraînement du tapis transporteur. Cet échauffement rapide est assuré par la résistance électrique 7a qui chauffe par rayonnement infra-rouge direct le dessous du support opaque aux infra-rouges de l'article à traiter, lequel chauffe à son tour les produits de brasage appliqués sur ledit support. Bien entendu, pour cela il faut que les articles à traiter reposent par leur support sur le tapis transporteur. Le réflecteur 9 réfléchit également une certaine proportion du rayonnement sur le dessus de l'article. Les composants électroniques portés par le support subissent un échauffement moindre, étant surtout exposés au rayonnement réfléchi, ce qui minimise le risque de détérioration par échauffement excessif.

c) après la fusion, un refroidissement rapide par les jets gazeux figeant la brasure avec possibilité de régler la vitesse de refroidissement en jouant sur le débit gazeux.

d) enfin, le refroidissement de l'ensemble par la chemise à circulation d'eau 16.

La figure 2 montre les profils de température typiques en fonction du temps, dans un four du genre de celui de la figure 1, dans le cas de l'emploi comme produits de brasure de pâtes d'alliage Sn/Pb. La courbe 1 correspond à l'alliage Sn/Pb (60/40) et la courbe 2 correspond à l'alliage Sn/Pb (95/5).

Une durée typique pour une opération de brasure est de 4 minutes environ. La durée de chaque palier de température est de 70 sec (courbe 1) et 60 sec (courbe 2). La durée de chaque pic de fusion est de 18 sec (courbe 1) et de 12 sec (courbe 2). Chaque pic correspond à des températures de 290-325 °C (courbe 2) et 180-220 °C (courbe 1).

Le four de l'invention peut être employé pour réaliser le brassage de queues de « wrapping », des queues de thermistances, de connecteurs, de boîtiers pour composants hyperfréquence, des connexions sur condensateur chips, et tout report de composants sur un substrat, etc...

**Revendications**

1. Un four continu de brasure pour l'assemblage de composants électroniques sur un support opaque aux rayons infra-rouges au moyen d'un produit de brasure ayant une température de fusion eutectique, qui comprend un moufle métallique (1), un tapis métallique sans fin (2) pénétrant dans le moufle à une extrémité de celui-ci et en sortant à l'autre extrémité, des moyens d'entraînement dudit tapis métallique, des moyens de chauffage s'étendant sur une portion (C) de la longueur du moufle, des moyens d'isolation thermiques (8, 10, 11, 12, 13) prévus autour de la portion chauffée du moufle, des moyens de refroidissement forcé (14, 15, 16) s'étendant sur une autre portion (R) de la longueur du moufle située à la suite de la précédente, des moyens d'introduction (17, 18, 19) d'un ou plusieurs gaz à l'intérieur du moufle, des moyens d'isolement (3, 4, 5) prévus à chaque extrémité du moufle pour isoler l'espace intérieur de celui-ci vis-à-vis de l'extérieur, caractérisé en ce que les moyens de chauffage comprennent, dans le sens de l'entrée vers la sortie du four, des premiers moyens de chauffage extérieurs (6) au moufle assurant la montée en température de l'assemblage à braser jusqu'à un palier de température inférieur à la température eutectique du produit de brasure, et des seconds moyens de chauffage intérieurs (7) au moufle portant le produit de brasure à une température supérieure à ladite température eutectique, ces moyens de chauffage intérieurs étant constitués de moyens de chauffage électrique par rayonnement infra-rouge (7a) disposés sous le tapis métallique et d'un réflecteur (9) prévu à la partie supérieure du moufle et faisant face au tapis métallique.

2. Un four selon la revendication 1, caractérisé en ce que les moyens de refroidissement comprennent des jets gazeux dirigés directement sur le dessus et le dessous de l'article à partir de distributeurs (14, 15).

3. Un four selon la revendication 1 ou 2, caractérisé en ce que les moyens de refroidissement du moufle comprennent, en outre, une chemise à circulation d'eau (16).

4. Un four selon la revendication 1, caractérisé en ce que les moyens de chauffage électrique à rayonnement infra-rouge sont constitués d'une résistance électrique gainée de céramique.

**Claims**

1. A continuous soldering furnace for the assembly of electronic components on a support which is opaque to infrared rays by means of a soldering product having an eutectic melting temperature, which furnace comprises a metal muffle (1), an endless metallic belt (2) entering the muffle at one end of the latter and leaving it at the other end, means for driving the said metal belt, means of heating extending over a part (C) of the length of the muffle, means (8, 10, 11, 12, 13) of thermal insulation provided around the heated part of the muffle, means (14, 15, 16) of forced cooling extending over another part (R) of the length of the muffle which is situated following the preceding part, means (17, 18, 19) for introducing one or more gases inside the muffle, means (3, 4, 5) of isolation provided at each end of the muffle to isolate the interior space of the latter with respect to the exterior, characterized in that said means of heating comprise, from the inlet to the outlet of the furnace, first means of heating (6), which are external to the muffle, ensuring the temperature rise of the assembly to be soldered up to a temperature plateau below the eutectic temperature of the soldering product, and second means of heating (7), which are inside the muffle, heating the soldering product to a temperature above the said eutectic temperature, said inner means being comprised of electrical infra-red-emitting heating means (7a) located beneath the metallic belt and a reflector (9) provided in the upper part of the muffle and facing said metallic belt.

2. A furnace as claimed in claim 1, characterized in that the means of cooling comprise gas jets aimed directly onto the top and bottom of the article, starting from distributors (14, 15).

3. A furnace as claimed in claim 1 or 2, characterized in that the means for cooling the muffle comprise further a water circulating jacket (16).

4. A furnace as claimed in claim 1, characterized in that the electrical infra-red-emitting heating means are comprised of an electrical ceramic-jacketed resistor.

**Patentansprüche**

1. Durchlaufofen zum Hartlöten für Anordnungen von elektronischen Bauteilen auf einem für Infrarotstrahlung undurchlässigen Träger mittels eines eine eutektische Schmelztemperatur aufweisenden Hartlots, der ausgerüstet ist mit einer metallischen Muffel (1), mit einem endlosen Metallband (2), das an einem Ende der Muffel in diese eintritt und an ihrem anderen Ende austritt, mit Antriebsmitteln für das genannte Metallband, mit über einem Abschnitt (C) der Länge der Muffel angeordneten Mittelnzum Aufheizen, mit um den erhitzten Abschnitt der Muffel herum angeordneten Mittel (8, 10, 11, 12, 13) zum thermischen Isolieren, mit Mitteln (14, 15, 16) einer Zwangskühlung, die sich in einem anderen, an den vorgenannten Abschnitt anschließenden Abschnitt R der Länge der Muffel befinden, mit Mitteln (17, 18, 19) zum Einführen eines oder mehrerer Gase in das Innere der Muffel sowie mit Isoliermitteln (3, 4, 5) an jedem Ende der Muffel zum Isolieren von deren Innenraum gegenüber der äußeren Umgebung, dadurch gekennzeichnet, daß die Mittel zum Heizen, betrachtet vom Eingang zum Ausgang des Ofens, erste äußere Heizungsmittel 6 für die Muffel umfassen, welche den Anstieg der Temperatur der dem Hartlöten zu unterwerfenden Anordnung bis zu einem Temperaturplateau, das unterhalb der eutektischen Temperatur des Hartlots liegt, sicherstellt, sowie zweite innere Heizungsmittel (7) für die Muffel aufweisen, welche das Hartlot auf eine Temperatur über der genannten eutektischen Temperatur bringen, wobei diese inneren Heizungsmittel aus Mitteln (7a) einer mittels Infrarotstrahlung arbeitenden elektrischen Heizung bestehen, die unter dem Metallband angeordnet sind, sowie ein Reflektor (9) vorgesehen ist, der im oberen Teil der Muffel angeordnet und dem Metallband zugewandt ist.

2. Ofen nach Anspruch 1, dadurch gekennzeichnet, daß die Mittel zum Abkühlen Gasstrahlen umfassen, welche von den Verteilern (14, 15) aus direkt auf die Oberseite und die Unterseite des Gegenstands gerichtet sind.

3. Ofen nach Anspruch 1 oder 2, dadurch gekennzeichnet, daß die Mittel zum Abkühlen der Muffel außerdem einen Mantel (16) zum Zirkulieren von Wasser umfassen.

4. Ofen nach Anspruch 1, dadurch gekennzeichnet, daß die Mittel der mit Infrarotstrahlung arbeitenden elektrischen Heizung aus einem von Keramik umhüllten elektrischen Widerstand bestehen.

FIG.:1

0 109 892

FIG.: 2

°C

300

250

200

150

100

50

60 s

70s

12 s

18s

1

2

TEMPS (mn)

1    2    3    4

0 109 892